# EUROPÄISCHE PATENTSCHRIFT

(11) **EP 2 242 557 B1**
(45) Veröffentlichungstag und Bekanntmachung des Hinweises auf die Patenterteilung: **23.11.2011**
(21) Anmeldenummer: 09703291.6
(22) Anmeldetag: 23.01.2009
(51) Int. Cl.: B01D 53/28, B01J 20/02

(54) **PORÖSE METALLORGANISCHE GERÜSTMATERIALIEN ALS TROCKENMITTEL**
POROUS METAL-ORGANIC FRAMEWORK MATERIALS AS DRYING AGENTS
MATÉRIAUX STRUCTURELS ORGANOMÉTALLIQUES POREUX SERVANT D'AGENTS DE SÉCHAGE

(30) Priorität: 24.01.2008 EP 08150593
(43) Veröffentlichungstag der Anmeldung: 27.10.2010
(73) Patentinhaber: BASF SE, 67056 Ludwigshafen (DE)
(72) Erfinder: SCHUBERT, Markus, 67063 Ludwigshafen (DE); MÜLLER, Ulrich, 67435 Neustadt (DE); KIENER, Christoph, 67256 Weisenheim Am Sand (DE)
(86) Internationale Anmeldenummer: PCT/EP2009/050747
(87) Internationale Veröffentlichungsnummer: WO 2009/092777

(56) Entgegenhaltungen:
- WO-A-03/102000
- DE-A1-102006 031 311
- ANSGAR BEHLER: "Trockenmittel" [Online] August 2005 (2005-08), GEORG THIEME VERLAG , XP002526969 Gefunden im Internet: URL:www.roempp.com> [gefunden am 2009-05-06] Dokumentkennung RD-20-03198 das ganze Dokument

## Beschreibung

Die vorliegende Erfindung betrifft die Verwendung poröser metallorganischer Gerüstmaterialien als Trockenmittel.

Bei der chemischen Reaktion werden häufig Lösemittel eingesetzt, die als Reaktionsmedium fungieren. Hierbei handelt es sich typischerweise um organische Flüssigkeiten, die aus einem organischen Lösemittel oder einem Gemisch solcher Lösemittel bestehen.

Störend können bei solchen chemischen Umsetzungen Spuren von Wasser sein, die die Ausbeute einer Reaktion verringern oder das Stattfinden einer solchen Reaktion gänzlich vermeiden. Daher wurden zahlreiche Methoden entwickelt, den Wassergehalt von organischen Flüssigkeiten zu reduzieren.

Eine einfache Möglichkeit besteht darin, das Lösemittel mit einem Trockenmittel in Verbindung zu bringen, damit das im Lösemittel befindliche Wasser an das Trockenmittel gebunden wird, so dass der Anteil des Wassers entsprechend im organischen Lösemittel reduziert wird.

Solche bekannten Mittel stellen Molekularsiebe, Kalziumchlorid, Magnesiumsulfat und dergleichen dar.

Trotz der im Stand der Technik bekannten Trockenmittel besteht ein Bedarf an alternativen Trockenmitteln, die sich insbesondere in besonders effizienter Weise für die Trocknung organischer Flüssigkeiten eignen.

Eine Aufgabe der vorliegenden Erfindung besteht somit darin, neue Stoffe einer solchen Verwendung zuzuführen.

Die Aufgabe wird gelöst durch die Verwendung eines porösen metallorganischen Gerüstmaterials, enthaltend mindestens eine an mindestens ein Metallion koordinativ gebundene, mindestens zweizähnige organische Verbindungen, als Trockenmittel zur Verringerung oder zum Entfernen von Wasser aus einer organischen Flüssigkeit.

Es hat sich gezeigt, dass metallorganische Gerüstmaterialien neben ihrer Eigenschaft als Adsorbens insbesondere für Gase oder zu Gastrennung auch hervorragend für die Trocknung organischer Flüssigkeiten geeignet sind.

Für die Verwendung als Trockenmittel zur Verringerung oder zum Entfernen von Wasser aus einer organischen Flüssigkeit dienen somit poröse metallorganische Gerüstmaterialien.

Solche metallorganischen Gerüstmaterialien (MOF) sind im Stand der Technik bekannt und werden beispielsweise beschrieben in US 5,648,508, EP-A-0 790 253, M. O'Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023 und DE-A-101 11 230.

Als eine spezielle Gruppe dieser metallorganischen Gerüstmaterialien werden in der jüngsten Literatur so genannte "beschränkte" Gerüstmaterialien beschrieben, bei denen das Gerüst durch spezielle Wahl der organischen Verbindung sich nicht unendlich sondern unter Ausbildung von Polyedern erstreckt. A.C. Sudik, et al., J. Am. Chem. Soc. 127 (2005), 7110-7118, beschreiben solche speziellen Gerüstmaterialien. Hierbei werden diese zur Abgrenzung als metallorganische Polyeder (MOP = Metal-Organic Polyhedra) genannt.

Eine weitere spezielle Gruppe von porösen metallorganischen Gerüstmaterialien sind solche, bei denen die organische Verbindung als Ligand ein mono-, bi- oder polycyclisches Ringsystem darstellt, das sich zumindest von einem der Heterocyclen ausgewählt aus der Gruppe bestehend aus Pyrrol, alpha-Pyridon und gamma-Pyridon ableitet und mindestens zwei Stickstoff-Ringatome aufweist. Die elektrochemische Herstellung solcher Gerüstmaterialien ist in WO-A 2007/131955 beschrieben.

Insbesondere diese speziellen Gruppen sind im Rahmen der vorliegenden Erfindung geeignet.

Die metallorganischen Gerüstmaterialien gemäß der vorliegenden Erfindung enthalten Poren, insbesondere Mirko- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1983), 603 - 619, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der metallorganischen Gerüstmaterialien für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein metallorganisches Gerüstmaterial in Pulverform mehr als 100 m²/g, mehr bevorzugt über 300 m²/g, mehr bevorzugt mehr als 700 m²/g, weiter mehr bevorzugt mehr als 800 m²/g, weiter mehr bevorzugt mehr als 1000 m²/g und besonders bevorzugt mehr als 1200 m²/g.

Formkörper enthaltend metallorganische Gerüstmaterialien können eine niedrigere aktive Oberfläche besitzen; vorzugsweise jedoch mehr als 150 m²/g, mehr bevorzugt mehr als 300 m²/g, weiter mehr bevorzugt mehr als 700 m²/g.

Die Metallkomponente im Gerüstmaterial nach der vorliegenden Erfindung ist vorzugsweise ausgewählt aus den Gruppen la, IIa, IIIa, IVa bis VIIIa und Ib bis VIb. Besonders bevorzugt sind Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb und Bi, wobei Ln für Lanthanide steht.

Lanthanide sind La, Ce, Pr, Nd, Pm, Sm, En, Gd, Tb, Dy, Ho, Er, Tm, Yb.

In Bezug auf die Ionen dieser Elemente sind besonders zu erwähnen Mg²⁺, Ca²⁺, Sr²⁺, Ba²⁺, Sc³⁺, Y³⁺**,** Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Ti³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Weiterhin besonders bevorzugt sind Zn, Al, Mg, Cu, Mn, Fe, Co, Ni, Ti, Zr, Y, Sc, V, In, Ca, Cr, Mo, W, Ln. Weiter bevorzugt sind Al, Cu, Zr, Y, Ln, Mn und Mg. Insbesondere ist Cu bevorzugt.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugten Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder -C(CN)₃ zu nennen.

Die funktionellen Gruppen können jedoch auch Heteroatome eines Heterocyclus sein. Insbesondere sind hierbei Stickstoffatome zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Mehr bevorzugt ist die mindestens zweizähnige organische Verbindung, ein aliphatischer oder aromatischer, acyclischer oder cyclischer Kohlenwasserstoff mit 1 bis 18, vorzugsweise 1 bis 10 und insbesondere 6 Kohlenstoffatomen, der zudem ausschließlich 2, 3 oder 4 Carboxylgruppen als funktionelle Gruppen aufweist.

Beispielsweise leitet sich die mindestens zweizähnige organische Verbindung von einer Dicarbonsäure ab, wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicärbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbonsäure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxoimidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cis-dicarbonsäure, 2,2'-Bichinolin-4,4'-dicarbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondümiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Dihydroxy-1,4-dicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinotin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Weiterhin mehr bevorzugt handelt es sich bei der mindestens zweizähnigen organischen Verbindung um eine der oben beispielhaft genannten Dicarbonsäure als solche.

Beispielsweise kann sich die mindestens zweizähnige organische Verbindung von einer Tricarbonsäure ableiten, wie etwa

2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon-+säure, 1,2,3-Propantricarbonsäure oder Aurintricarbonsäure,

Weiterhin mehr bevorzugt ist die mindestens zweizähnige organische Verbindung einer der oben beispielhaft genannten Tricarbonsäuren als solche.

Beispiele für eine mindestens zweizähnige organische Verbindung, die sich von einer Tetracarbonsäure ableitet, sind

1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure.

Weiterhin mehr bevorzugt handelt es sich bei der mindestens zweizähnigen organischen Verbindung um eine der oben beispielhaft genannten Tetracarbonsäuren als solche.

In einer bevorzugten Ausführungsform leitet sich also die mindestens eine mindestens zweizähnige organische Verbindung von einer Di-, Tri- oder Tetracarbonsäure ab oder ist eine solche.

Der Begriff "ableiten" bedeutet im Rahmen der vorliegenden Erfindung, dass die Di-, Tri- oder Tetracarbonsäure im Gerüstmaterial in teilweise deprotonierter oder vollständig deprotonierter Form vorliegen kann. Weiterhin kann die Di-, Tri- oder Tetracarbonsäure einen Substituenten oder unabhängig voneinander mehrere Substituenten enthalten. Beispiele für solche Substituenten sind -OH, -NH₂, -OCH₃, -CH₃, -NH(CH₃), -N(CH₃)₂, -CN sowie Halogenide. Darüber hinaus bedeutet der Begriff "ableiten" im Rahmen der vorliegenden Erfindung, dass die Di-, Tri- oder Tetracarbonsäure auch in Form der entsprechenden Schwefelanaloga vorliegen kann. Schwefelanaloga sind die funktionellen Gruppen -C(=O)SH sowie dessen Tautomer und C(=S)SH, die anstelle einer oder mehrerer Carbonsäuregruppen eingesetzt werden können. Darüber hinaus bedeutet der Begriff "ableiten" im Rahmen der vorliegenden Erfindung, dass eine oder mehrere Carbonsäurefunktionen durch eine Sulfonsäuregruppe (-SO₃H) ersetzt sein kann. Darüber hinaus kann ebenso zusätzlich zu den 2, 3 oder 4 Carbonsäurefunktionen eine Sulfonsäuregruppe treten.

Bevorzugte Heterocyclen als mindestens zweizähnige organische Verbindungen, bei denen eine koordinative Bindung über die Ringheteroatome erfolgt, sind die folgenden substituierten oder unsubstituierten Ringsysteme:

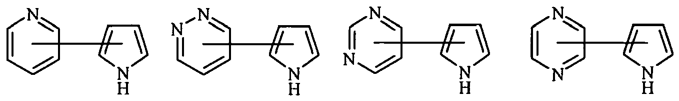

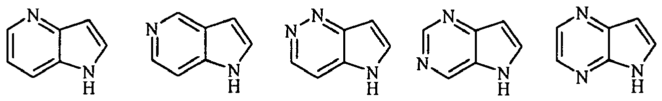

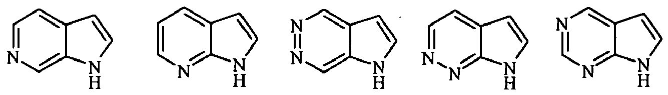

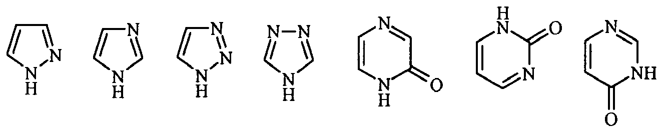

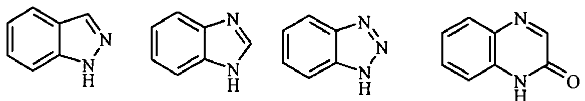

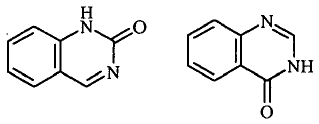

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Imidazolate, wie 2-Methylimidazolat, Acetylendicarbonsäure (ADC), Campherdicarbonsäure, Fumarsäure, Bernsteinsäure, Benzoldicarbonsäuren wie Phthalsäure, Isophthalsäure, Terephthalsäure (BDC), Aminoterephthaläure, Triethylendiamin (TE-DA), Naphthalindicarbonsäuren (NDC), Biphenyldicarbonsäuren wie beispielsweise 4,4'-Biphenyldicarbonsäure (BPDC), Pyrazindicarbonsäuren, wie 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem 2-Methylimidazol, 2-Ethylimidazol, Phthalsäure, Isophthalsäure, Terephthalsäure, 2,6-Naphthalindicarbonsäure, 1,4-Naphthalindicarbonsäure, 1,5-Naphthalindicarbonsäure, 1,2,3-Benzoltricarbonsäure, 1,2,4-Benzoltricarbonsäure, 1,3,5-Benzoltricarbonsäure, 1,2,4,5-Benzoltetracarbonsäure, AminoBDC, TEDA, Fumarsäure, Biphenyldicarboxylat, 1,5- und 2,6-Naphthalindicarbonsäure, tert.-Butylisophthalsäure, Dihydroxybenzoesäure.

Insbesondere sind bevorzugt Terephthalsäure, 2,6- und 1,5-Naphthalindicarbonsäure, Isophthalsäure, Fumarsäure, 1,3,5-Benzoltricarbonsäure (BTC), Trimellitsäure, Glutarsäure, 2,5-Dihydroxyterphthalsäure und 4,5-Imidazoldicarbonsäure sowie Säuren, die sich davon ableiten. Ganz besonders bevorzugt ist BTC.

Neben diesen mindestens zweizähnigen organischen Verbindungen kann das metallorganische Gerüstmaterial auch einen oder mehrere einzähnige Liganden und/oder einen oder mehrere mindestens zweizähnige Liganden, die sich nicht von einer Di-, Tri- oder Tetracarbonsäure ableiten, umfassen.

Neben diesen mindestens zweizähnigen organischen Verbindungen kann der MOF auch eine oder mehrere einzähnige Liganden umfassen.

Geeignete Lösemittel zur Herstellung der MOF sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpolidonether, Acetonitril, Benzylchlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des metallorganischen Gerüstmaterials kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem Formkörper enthaltend ein metallorganisches Gerüstmaterial treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

Nachfolgend sind Beispiele für metallorganische Gerüstmaterialien angegeben. Neben der Kennzeichnung des Gerüstmaterials, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O H₃(BTC) | Ethanol | 90 | 90 | 120 | 16.711 | 16.711 | 14.189 | P6(3)/ Mcm |
| MOF-2 | Zn(NO₃)₂6H₂O (0.246 mmol) H₂(BDC) 0.241 mmol) | DMF Toluen | 90 | 102.8 | 90 | 6.718 | 15.49 | 12.43 | P2(1)/n |
| MOF-3 | Zn(NO₃)₂6H₂O (1.89 mmol) H₂(BDC) (1.93mmol) | DMF MeOH | 99.72 | 111.11 | 108.4 | 9.726 | 9.911 | 10.45 | P-1 |
| MOF-4 | Zn(NO₃)₂6H₂O (1.00 mmol) H₃(BTC) (0.5 mmol) | Ethanol | 90 | 90 | 90 | 14.728 | 14.728 | 14.728 | P2(1)3 |
| MOF-5 | Zn(NO₃)₂·6H₂O (2.22 mmol) H₂(BDC) (2.17 mmol) | DMF Chlorbenzen | 90 | 90 | 90 | 25.669 | 25.669 | 25.669 | Fm-3m |
| MOF-38 | Zn(NO₃)₂6H₂O (0.27 mmol) H₃(BTC) (0.15 mmol) | DMF Chlorbenzen | 90 | 90 | 90 | 20.657 | 20.657 | 17.84 | 14cm |
| | | | | | | | | | |
| MOF-31 Zn(ADC)₂ | Zn(NO₃)₂·6H₂O 0.4 mmol H₂(ADC) 0.8 mmol | Ethanol | 90 | 90 | 90 | 10.821 | 10.821 | 10.821 | Pn(-3)m |
| MOF-12 Zn₂(ATC) | Zn(NO₃)₂6H₂O 0.3 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.2 mmol H₂NDC 0.2 mmol | DEF Chlorbenzen | 72.38 | 83.16 | 84.33 | 9.952 | 11.576 | 15.556 | P-1 |
| MOF-8 Tb₂ (ADC) | Tb(NO₃)₃·5H₂O 0.10 mmol H₂ADC 0.20 mmol | DMSO MeOH | 90 | 115.7 | 90 | 19.83 | 9.822 | 19.183 | C2/c |
| MOF-9 Tb₂ (ADC) | Tb(NO₃)₃·5H₂O 0.08 mmol H₂ADB 0.12 mmol | DMSO | 90 | 102.09 | 90 | 27.056 | 16.795 | 28.139 | C2/c |
| MOF-6 | Tb(NO₃)₃·5H₂O 0.30 mmol H₂ (BDC) 0.30 mmol | DMF MeOH | 90 | 91.28 | 90 | 17.599 | 19.996 | 10.545 | P21/c |
| MOF-7 | Tb(NO₃)₃·5H₂O 0.15 mmol H₂(BDC) 0.15 mmol | H₂O | 102.3 | 91.12 | 101.5 | 6.142 | 10.069 | 10.096 | P-1 |
| MOF-69A | Zn(NO₃)₂·6H₂O 0.083 mmol 4,4'BPDC 0.041 mmol | DEF H₂O₂ MeNH₂ | 90 | 111.6 | 90 | 23.12 | 20.92 | 12 | C2/c |
| MOF-69B | Zn(NO₃)₂·6H₂O 0.083 mmol 2,6-NCD 0.041 mmol | DEF H₂O₂ MeNH₂ | 90 | 95.3 | 90 | 20.17 | 18.55 | 12.16 | C2/c |
| MOF-11 Cu₂(ATC) | Cu(NO₃)₂·2.5H₂O 0.47 mmol H₂ATC 0.22 mmol | H₂O | 90 | 93.86 | 90 | 12.987 | 11.22 | 11.336 | C2/c |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol H₃BTB 0.052 mmol | H₂O DMF EtOH | 90 | 90 | 90 | 26.946 | 26.946 | 26.946 | Im-3 |
| MOF-32 Cd(ATC) | Cd(NO₃)₂·4H₂O 0.24 mmol H₄ATC 0.10 mmol | H₂O NaOH | 90 | 90 | 90 | 13.468 | 13.468 | 13.468 | P(-4)3m |
| MOF-33 Zn₂ (ATB) | ZnCl₂ 0.15 mmol H₄ATB 0.02 mmol | H₂O DMF EtOH | 90 | 90 | 90 | 19.561 | 15.255 | 23.404 | Imma |
| MOF-34 Ni(ATC) | Ni(NO₃)₂·6H₂O 0.24 mmol H₄ATC 0.10 mmol | H₂O NaOH | 90 | 90 | 90 | 10.066 | 11.163 | 19.201 | P2₁2₁2₁ |
| MOF-36 Zn₂ (MTB) | Zn(NO₃)₂·4H₂O 0.20 mmol H₄MTB 0.04 mmol | H₂O DMF | 90 | 90 | 90 | 15.745 | 16.907 | 18.167 | Pbca |
| MOF-39 Zn₃O(HBTB ) | Zn(NO₃)₂ 4H₂O 0.27 mmol H₃BTB 0.07 mmol | H₂O DMF EtOH | 90 | 90 | 90 | 17.158 | 21.591 | 25.308 | Pnma |
| NO305 | FeCl₂·4H₂O 5.03 mmol Ameisensre. 86.90 mmol | DMF | 90 | 90 | 120 | 8.2692 | 8.2692 | 63.566 | R-3c |
| N0306A | FeCl₂·4H₂O 5.03 mmol Ameisensre. 86.90 mmol | DEF | 90 | 90 | 90 | 9.9364 | 18.374 | 18.374 | Pbcn |
| | | | | | | | | | |
| NO29 MOF-0 ähnlich | Mn(Ac)₂·4H₂O 0.46 mmol H₃BTC 0.69 mmol | DMF | 120 | 90 | 90 | 14.16 | 33.521 | 33.521 | P-1 |
| BPR48 A2 | Zn(NO₃)₂ 6H₂O 0.012 mmol H₂BDC 0.012 mmol | DMSO Toluen | 90 | 90 | 90 | 14.5 | 17.04 | 18.02 | Pbca |
| BPR69 B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| BPR92 A2 | Co(NO₃)₂·6H₂O 0.018 mmol H₂BDC 0.018 mmol | NMP | 106.3 | 107.63 | 107.2 | 7.5308 | 10.942 | 11.025 | P1 |
| BPR95 C5 | Cd(NO₃)₂ 4H₂O 0.012 mmol H₂BDC 0.36 mmol | NMP | 90 | 112.8 | 90 | 14.460 | 11.085 | 15.829 | P2(1)/n |
| Cu C₆H₄O₆ | Cu(NO₃)₂2.5H₂ O 0.370 mmol H₂BDC(OH)₂ 0.37 mmol | DMF Chlorbenzen | 90 | 105.29 | 90 | 15.259 | 14.816 | 14.13 | P2(1)/c |
| M(BTC) MOF-0 ähnlich | Co(SO₄) H₂O 0.055 mmol H₃BTC 0.037 mmol | DMF | wie MOF-0 | | | | | | |
| Tb(C₆H₄O₈) | Tb(NO₃)₃·5H₂O 0.370 mmol H₂(CeH₄O₈) 0.56 mmol | DMF Chlobenzen | 104.6 | 107.9 | 97.147 | 10.491 | 10.981 | 12.541 | P-1 |
| Zn (C₂O₄) | ZnCl₂ 0.370 mmol Oxalsäure 0.37 mmol | DMF Chlorbenzen | 90 | 120 | 90 | 9.4168 | 9.4168 | 8.464 | P(-3)1 m |
| Co(CHO) | Co(NO₃)₂·5H₂O 0.043 mmol Ameisensre. 1.60 mmol | DMF | 90 | 91.32 | 90 | 11.328 | 10.049 | 14.854 | P2(1)/n |
| Cd(CHO) | Cd(NO₃)₂·4H₂O 0.185 mmol formic acid 0.185 mmol | DMF | 90 | 120 | 90 | 8.5168 | 8.5168 | 22.674 | R-3c |
| Cu(C₃H₂O₄) | Cu(NO₃)₂·2.5H₂ O 0.043 mmol Malonsre. 0.192 mmol | DMF | 90 | 90 | 90 | 8.366 | 8.366 | 11.919 | P43 |
| Zn₆ (NDC)₅ MOF-48 | Zn(NO₃)₂·6H₂O 0.097 mmol 14 NDC 0.069 mmol | DMF Chlorbenzen H₂O₂ | 90 | 95.902 | 90 | 19.504 | 16.482 | 14.64 | C2/m |
| | | | | | | | | | |
| MOF-47 | Zn(NO₃)₂ 6H₂O 0.185 mmol H₂(BDC[CH₃]₄) 0.185 mmol | DMF Chlorbenzen H₂O₂ | 90 | 92.55 | 90 | 11.303 | 16.029 | 17.535 | P2(1)/c |
| M025 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol Thiophen Dicarbonsre. 0.085 mmol | DEF | 90 | 113.6 | 90 | 15.474 7 | 14.514 | 14.032 | P2(1)/c |
| CIBDC1 | Cu(NO₃)₂·2.5H₂O 0.084 mmol H₂(BDCCl₂) 0.085 mmol | DMF | 90 | 105.6 | 90 | 14.911 | 15.622 | 18.413 | C2/c |
| MOF-101 | Cu(NO₃)₂·2.5H₂O 0.084 mmol BrBDC 0.085 mmol | DMF | 90 | 90 | 90 | 221.607 | 20.607 | 20.073 | Fm3m |
| Zn₃(BTC)₂ | ZnCl₂ 0.033 mmol H₃BTC 0.033 mmol | DMF EtOH Base zugegeben | 90 | 90 | 90 | 26.572 | 26.572 | 26.572 | Fm-3m |
| MOF-j | Co(CH₃CO₂)₂·4H₂O (1.65 mmol) H₃(BZC) (0.95 mmol) | H₂O | 90 | 112.0 | 90 | 17.482 | 12.963 | 6.559 | C2 |
| MOF-n | Zn(NO₃)₂6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) H₂(BDC) (0.181 mmol) | DMF Ethanol | 90 | 102.7 | 90 | 8.3639 | 17.991 | 9.9617 | P2(1)/n |
| Znhex | Zn(NO₃)₂6H₂O (0.171 mmol) H₃BTB (0.114 mmol) | DMF p-Xylen Ethanol | 90 | 90 | 120 | 37.116 5 | 37.117 | 30.019 | P3(1)c |
| AS16 | FeBr₂ 0.927 mmol H₂(BDC) 0.927 mmol | DMF anhydr. | 90 | 90.13 | 90 | 7.2595 | 8.7894 | 19.484 | P2(1)c |
| AS27-2 | FeBr₂ 0.927 mmol H₃(BDC) 0.464 mmol | DMF anhydr. | 90 | 90 | 90 | 26.735 | 26.735 | 26.735 | Fm3m |
| AS32 | FeCl₃ 1.23 mmol H₂(BDC) 1.23 mmol | DMF anhydr. Ethanol | 90 | 90 | 120 | 12.535 | 12.535 | 18.479 | P6(2)c |
| | | | | | | | | | |
| AS54-3 | FeBr₂ 0.927 BPDC 0.927 mmol | DMF anhydr. n-Propa nol | 90 | 109.98 | 90 | 12.019 | 15.286 | 14.399 | C2 |
| AS61-4 | FeBr₂ 0.927 mmol m-BDC 0.927 mmol | Pyridin anhydr. | 90 | 90 | 120 | 13.017 | 13.017 | 14.896 | P6(2)c |
| AS68-7 | FeBr₂ 0.927 mmol m-BDC 1.204 mmol | DMF anhydr. Pyridin | 90 | 90 | 90 | 18.340 7 | 10.036 | 18.039 | Pca2, |
| Zn(ADC) | Zn(NO₃)₂6H₂O 0.37 mmol H₂(ADC) 0.36 mmol | DMF Chlorbenzen | 90 | 99.85 | 90 | 16.764 | 9.349 | 9.635 | C2/c |
| MOF-12 Zn₂ (ATC) | Zn(NO₃)₂6H₂O 0.30 mmol H₄(ATC) 0.15 mmol | Ethanol | 90 | 90 | 90 | 15.745 | 16.907 | 18.167 | Pbca |
| MOF-20 ZnNDC | Zn(NO₃)₂6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂6H₂O 0.20 mmol H₂NDC 0.20 mmol | DEF Chlorbenzen | 72.38 | 83.16 | 84.33 | 9.952 | 11.576 | 15.556 | P-1 |
| Zn(NDC) (DMSO) | Zn(NO₃)₂·6H₂O H₂NDC | DMSO | 68.08 | 75.33 | 88.31 | 8.631 | 10.207 | 13.114 | P-1 |
| Zn(NDC) | Zn(NO₃)₂6H₂O H₂NDC | | 90 | 99.2 | 90 | 19.289 | 17.628 | 15.052 | C2/c |
| Zn(HPDC) | Zn(NO₃)₂·4H₂O 0.23 mmol H₂(HPDC) 0.05 mmol | DMF H₂O | 107.9 | 105.06 | 94.4 | 8.326 | 12.085 | 13.767 | P-1 |
| Co(HPDC) | Co(NO₂)₂6H₂O 0.21 mmol H₂ (HPDC) 0.06 mmol | DMF H₂O/ Ethanol | 90 | 97.69 | 90 | 29.677 | 9.63 | 7.981 | C2/c |
| Zn₃(PDC)₂. 5 | Zn(NO₃)₂·4H₂O 0.17 mmol H₂(HPDC) 0.05 mmol | DMFI CIBz H₂O/ TEA | 79.34 | 80.8 | 85.83 | 8.564 | 14.046 | 26.428 | P-1 |
| Cd₂ (TPDC)2 | Cd(NO₃)₂·4H₂O 0.06 mmol H₂(HPDC) 0.06 mmol | Methanol/ CHP H₂O | 70.59 | 72.75 | 87.14 | 10.102 | 14.412 | 14.964 | P-1 |
| Tb(PDC)1.5 | Tb(NO₃)₃·5H₂O 0.21 mmol H₂(PDC) 0.034 mmol | DMF H₂O/ Ethanol | 109.8 | 103.61 | 100.14 | 9.829 | 12.11 | 14.628 | P-1 |
| | | | | | | | | | |
| ZnDBP | 7n(NO₃)₂6H₂O 0.05 mmol Dibenzylphosphat 0.10 mmol | MeOH | 90 | 93.67 | 90 | 9.254 | 10.762 | 27.93 | P2/n |
| Zn₃(BPD C) | ZnBr₂ 0.021 mmol 4,4'BPDC 0.005 mmol | DMF | 90 | 102.76 | 90 | 11.49 | 14.79 | 19.18 | P21/n |
| CdBDC | Cd(NO₃)₂·4H₂O 0.100 mmol H₂(BDC) 0.401 mmol | DMF Na₂Si O₃ (aq) | 90 | 95.85 | 90 | 11.2 | 11.11 | 16.71 | P21/n |
| Cd-mBDC | Cd(NO₃)₂4H₂O 0.009 mmol H₂(mBDC) 0.018 mmol | DMF MeNH2 | 90 | 101.1 | 90 | 13.69 1 | 18.25 | 14.91 | C2/c |
| Zn₄OBND C | Zn(NO₃)₂·6H₂O 0.041 mmol BNDC | DEF MeNH₂ H₂O₂ | 90 | 90 | 90 | 22.35 | 26.05 | 59.56 | Fmmm |
| Eu(TCA) | Eu(NO₃)₃·6H₂O 0.14 mmol TCA 0.026 mmol | DMF Chlorbenzen | 90 | 90 | 90 | 23.325 | 23.325 | 23.325 | Pm-3n |
| Tb(TCA) | Tb(NO₃)₃·6H₂O 0.069 mmol TCA 0.026 mmol | DMF Chlorbenzen | 90 | 90 | 90 | 23.272 | 23.272 | 23.372 | Pm-3n |
| Formate | Ce(NO₃)₃·6H₂O 0.138 mmol Ameisensre. 0.43 mmol | H₂O Ethanol | 90 | 90 | 120 | 10.668 | 0.667 | 4.107 | R-3m |
| | FeCl₂·4H₂O 5.03 mmol Ameisensre. 86.90 mmol | DMF | 90 | 90 | 120 | 8.2692 | 8.2692 | 63.566 | R-3c |
| | FeCl₂·4H₂O 5.03 mmol Ameisensre. 86.90 mmol | DEF | 90 | 90 | 90 | 9.9364 | 18.374 | 8.374 | Pbcn |
| | FeCl₂·4H₂O 5.03 mmol Ameisensre. 86.90 mmol | DEF | 90 | 90 | 90 | 8.335 | 8.335 | 13.34 | P-31c |
| NO330 | FeCl₂·4H₂O 0.50 mmol Ameisensre. 8.69 mmol | Formamid | 90 | 90 | 90 | 8.7749 | 11.655 | 8.3297 | Pnna |
| N0332 | FeCl₂·4H₂O 0.50 mmol Ameisensre. 8.69 mmol | DIP | 90 | 90 | 90 | 10.031 3 | 18.808 | 18.355 | Pbcn |
| | | | | | | | | | |
| N0333 | FeCl₂·4H₂O 0.50 mmol Ameisensre. 8.69 mmol | DBF | 90 | 90 | 90 | 45.275 4 | 23.861 | 12.441 | Cmcm |
| N0335 | FeCl₂·4H₂O 0.50 mmol Ameisensre. 8.69 mmol | CHF | 90 | 91.372 | 90 | 11.596 4 | 10.187 | 14.945 | P21/n |
| N0336 | FeCl₂·4H₂O 0.50 mmol Ameisensre. 8.69 mmol | MFA | 90 | 90 | 90 | 11.794 5 | 48.843 | 8.4136 | Pbcm |
| NO13 | Mn(Ac)₂·H₂O 0.46 mmol Benzoesre. 0.92 mmol Bipyridin 0.46 mmol | Ethanol | 90 | 90 | 90 | 18.66 | 11.762 | 9.418 | Pbcn |
| NO29 MOF-0 ähnlich | Mn(Ac)₂·H₂O 0.46 mmol H₃BTC 0.69 mmol | DMF | 120 | 90 | 90 | 14.16 | 33.521 | 33.521 | P-1 |
| Mn(hfac)₂ (O₂CC₆H₅ ) | Mn(Ac)₂·4H₂O 0.46 mmol Hfac 0.92 mmol Bipyridin 0.46 mmol | Ether | 90 | 95.32 | 90 | 9.572 | 17.162 | 14.041 | C2/c |
| BPR43G2 | Zn(NO₃)₂·6H₂O 0.0288 mmol H₂BDC 0.0072 mmol | DMF CH₃C N | 90 | 91.37 | 90 | 17.96 | 6.38 | 7.19 | C2/c |
| BPR48A2 | Zn(NO₃)₂6H₂O 0.012 mmol H₂BDC 0.012 mmol | DMSO Toluen | 90 | 90 | 90 | 14.5 | 17.04 | 18.02 | Pbca |
| BPR49B1 | Zn(NO₃)₂6H₂O 0.024 mmol H₂BDC 0.048 mmol | DMSO Methanol | 90 | 91.172 | 90 | 33.181 | 9.824 | 17.884 | C2/c |
| BPR56E1 | Zn(NO₃)₂ 6H₂O 0.012 mmol H₂BDC 0.024 mmol | DMSO nPropanol | 90 | 90.096 | 90 | 14.587 3 | 14.153 | 17.183 | P2(1)/n |
| BPR68D10 | Zn(NO₃)₂ 6H₂O 0.0016 mmol H₃BTC 0.0064 mmol | DMSO Benzen | 90 | 95.316 | 90 | 10.062 7 | 10.17 | 16.413 | P2(1)/c |
| BPR69B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| | | | | | | | | | |
| BPR73E4 | Cd(NO₃)₂ 4HO₂ 0.006 mmol H₂BDC 0.003 mmol | DMSO Toluen | 90 | 92.324 | 90 | 8.7231 | 7.0568 | 18.438 | P2(1)/n |
| BPR76D5 | Zn(NO₃)₂ 6H₂O 0.0009 mmol H₂BzPDC 0.0036 mmol | DMSO | 90 | 104.17 | 90 | 14.419 1 | 6.2599 | 7.0611 | 1 Pc |
| BPR80B5 | Cd(NO₃)₂·4H₂O 0.018 mmol H₂BDC 0.036 mmol | DMF | 90 | 115.11 | 90 | 28.049 | 9.184 | 17.837 | C2/c |
| BPR80H5 | Cd(NO₃)₂ 4H₂O 0.027 mmol H₂BDC 0.027 mmol | DMF | 90 | 119.06 | 90 | 11.4746 | 6.2151 | 17.268 | P2/c |
| BPR82C6 | Cd(NO₃)₂ 4H₂O 0.0068 mmol H₂BDC 0.202 mmol | DMF | 90 | 90 | 90 | 9.7721 | 21.142 | 27.77 | Fdd2 |
| BPR86C3 | Co(NO₃)₂ 6H₂O 0.0025 mmol H₂BDC 0.075 mmol | DMF | 90 | 90 | 90 | 18.344 9 | 10.031 | 17.983 | Pca2(1) |
| BPR86H6 | Cd(NO₃)₂·6H₂O 0.010 mmol H₂BDC 0.010 mmol | DMF | 80.98 | 89.69 | 83.41 2 | 9.8752 | 10.263 | 15.362 | P-1 |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol H₂BDC 0.012 mmol | NMP | 90 | 102.9 | 90 | 7.4502 | 13.767 | 12.713 | P2(1)/c |
| CuC₆F₄O₄ | Cu(NO₃)₂·2.5H₂ O 0.370 mmol H₂BDC(OH)₂ 0.37 mmol | DMF Chlorbenzen | 90 | 98.834 | 90 | 10.967 5 | 24.43 | 22.553 | P2(1)/n |
| Fe Formic | FeCl₂·4H₂O 0.370 mmol Ameisensre. 0.37 mmol | DMF | 90 | 91.543 | 90 | 11.495 | 9.963 | 14.48 | P2(1)/n |
| Mg Formic | Mg(NO₃)₂·6H₂O 0.370 mmol Ameisensre. 0.37 mmol | DMF | 90 | 91.359 | 90 | 11.383 | 9.932 | 14.656 | P2(1)/n |
| MgC₆H₄O₆ | Mg(NO₃)₂·6H₂O 0.370 mmol H₂BDC(OH)₂ 0.37 mmol | DMF | 90 | 96.624 | 90 | 17.245 | 9.943 | 9.273 | C2/c |
| Zn C₂H₄BDC MOF-38 | ZnCl₂ 0.44 mmol CBBDC 0.261 mmol | DMF | 90 | 94.714 | 90 | 7.3386 | 16.834 | 12.52 | P2(1)/n |
| MOF-49 | ZnCl₂ 0.44 mmol m-BDC 0.261 mmol | DMF CH₃CN | 90 | 93.459 | 90 | 13.509 | 11.984 | 27.039 | P2/c |
| MOF-26 | Cu(NO₃)₂·5H₂O 0.084 mmol DCPE 0.085 mmol | DMF | 90 | 95.607 | 90 | 20.879 7 | 16.017 | 26.176 | P2(1)/n |
| MOF-112 | Cu(NO₃)₂·2.5H₂ O 0.084 mmol o-Br-m-BDC 0.085 mmol | DMF Ethanol | 90 | 107.49 | 90 | 29.324 1 | 21.297 | 18.069 | C2/c |
| MOF-109 | Cu(NO₃)₂·2.5H₂ O 0.084 mmol KDB 0.085 mmol | DMF | 90 | 111.98 | 90 | 23.880 1 | 16.834 | 18.389 | P2(1)/c |
| MOF-111 | Cu(NO₃)₂·2.5H₂ O 0.084 mmol o-BrBDC 0.085 mmol | DMF Ethanol | 90 | 102.16 | 90 | 10.676 7 | 18.781 | 21.052 | C2/c |
| MOF-110 | Cu(NO₃)₂·2.5H₂ O 0.084 mmol Thiophen Dicarbonsre. 0.085 mmol | DMF | 90 | 90 | 120 | 20.065 2 | 20.065 | 20.747 | R-3/m |
| MOF-107 | Cu(NO₃)₂·2.5H₂ O 0.084 mmol Thiophen Dicarbonsre. 0.085 mmol | DEF | 104.8 | 97.075 | 95.20 6 | 11.032 | 18.067 | 18.452 | P-1 |
| MOF-108 | Cu(NO3)2·2.5H 20 0.084 mmol Thiophen Dicarbonsre. 0.085 mmol | DBF/ Methanol | 90 | 113.63 | 90 | 15.474 7 | 14.514 | 14.032 | C2/c |
| MOF-102 | Cu(NO3)2·2.5H 20 0.084 mmol H2(BDCCl2) 0.085 mmol | DMF | 91.63 | 106.24 | 112.0 1 | 9.3845 | 10.794 | 10.831 | P-1 |
| Clbdc1 | Cu(NO3)2·2.5H 20 0.084 mmol H2(BDCCl2) 0.085 mmol | DEF | 90 | 105.56 | 90 | 14.911 | 15.622 | 18.413 | P-1 |
| Cu(NMOP) | Cu(NO3)2·2.5H 20 0.084 mmol NBDC 0.085 mmol | DMF | 90 | 102.37 | 90 | 14.923 8 | 18.727 | 15.529 | P2(1)/m |
| Tb(BTC) | Tb(NO3)3·5H2O 0.033 mmol H3BTC 0.033 mmol | DMF | 90 | 106.02 | 90 | 18.698 6 | 11.368 | 19.721 | |
| Zn3(BTC)2 Honk | ZnCl2 0.033 mmol H3BTC 0.033 mmol | DMF Ethanol | 90 | 90 | 90 | 26.572 | 26.572 | 26.572 | Fm-3m |
| Zn40(NDC) | Zn(NO3)2·4H2O 0.066 mmol 14NDC 0.066 mmol | DMF Ethanol | 90 | 90 | 90 | 41.559 4 | 18.818 | 17.574 | aba2 |
| CdTDC | Cd(NO3)2·4H2O 0.014 mmol Thiophen 0.040 mmol DABCO 0.020 mmol | DMF H2O | 90 | 90 | 90 | 12.173 | 10.485 | 7.33 | Pmma |
| IRMOF-2 | Zn(NO3)2·4H2O 0.160 mmol o-Br-BDC 0.60 mmol | DEF | 90 | 90 | 90 | 25.772 | 25.772 | 25.772 | Fm-3m |
| IRMOF-3 | Zn(NO3)2·4H2O 0.20 mmol H2N-BDC 0.60 mmol | DEF Ethanol | 90 | 90 | 90 | 25.747 | 25.747 | 25.747 | Fm-3m |
| IRMOF-4 | Zn(NO3)2·4H2O 0.11 mmol [C3H70]2-BDC 0.48 mmol | DEF | 90 | 90 | 90 | 25.849 | 25.849 | 25.849 | Fm-3m |
| IRMOF-5 | Zn(NO3)2·4H2O 0.13 mmol [C5H11O]2-BDC 0.50 mmol | DEF | 90 | 90 | 90 | 12.882 | 12.882 | 12.882 | Pm-3m |
| IRMOF-6 | Zn(NO3)2·4H2O 0.20 mmol [C2H4]-BDC 0.60 mmol | DEF | 90 | 90 | 90 | 25.842 | 25.842 | 25.842 | Fm-3m |
| IRMOF-7 | Zn(NO3)2·4H2O 0.07 mmol 1,4NDC 0.20 mmol | DEF | 90 | 90 | 90 | 12.914 | 12.914 | 12.914 | Pm-3m |
| IRMOF-8 | Zn(NO3)2·4H2O 0.55 mmol 2,6NDC 0.42 mmol | DEF | 90 | 90 | 90 | 30.092 | 30.092 | 30.092 | Fm-3m |
| IRMOF-9 | Zn(NO3)2·4H2O 0.05 mmol BPDC 0.42 mmol | DEF | 90 | 90 | 90 | 17.147 | 23.322 | 25.255 | Pnnm |
| IRMOF-10 | Zn(NO3)2·4H2O 0.02 mmol * BPDC 0.012 mmol | DEF | 90 | 90 | 90 | 34.281 | 34.281 | 34.281 | Fm-3m |
| IRMOF-11 | Zn(NO3)2·4H2O 0.05 mmol HPDC 0.20 mmol | DEF | 90 | 90 | 90 | 24.822 | 24.822 | 56.734 | R-3m |
| IRMOF-12 | Zn(NO3)2·4H2O 0.017 mmol HPDC 0.12 mmol | DEF | 90 | 90 | 90 | 34.281 | 34.281 | 34.281 | Fm-3m |
| | | | | | | | | | |
| IRMOF-13 | Zn(NO₃)₂·4H₂O 0.048 mmol PDC 0.31 mmol | DEF | 90 | 90 | 90 | 24.822 | 24.822 | 56.734 | R-3m |
| IRMOF-14 | Zn(NO₃)₂·4H₂O 0.17 mmol PDC 0.12 mmol | DEF | 90 | 90 | 90 | 34.381 | 34.381 | 34.381 | Fm-3m |
| IRMOF-15 | Zn(NO₃)₂·4H₂O 0.063 mmol TPDC 0.025 mmol | DEF | 90 | 90 | 90 2 | 21.459 | 21.459 | 21.459 | Im-3m |
| IRMOF-16 | Zn(NO₃)₂·4H₂O 0.0126 mmol N TPDC 0.05 mmol | DEF NMP | 90 | 90 | 90 | 21.49 | 21.49 | 21.49 | Pm-3m |

- ADC: Acetylenedicarbonsäure
- NDC: Naphtalindicarbonsäure
- BDC: Benzoldicarbonsäure
- ATC: Adamantantetracarbonsäure
- BTC: Benzoltricarbonsäure
- BTB: Benzoltribenzoesäure
- MTB: Methantetrabenzoesäure
- ATB: Adamantantetrabenzoesäure
- ADB: Adamantandibenzoesäure

Weitere metallorganische Gerüstmaterialien sind MOF-2 bis 4, MOF-9, MOF-31 bis 36, MOF-39, MOF-69 bis 80, MOF103 bis 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 bis 2, SZL-1 welche in der Literatur beschrieben sind.

Besonders bevorzugte metallorganische Gerüstmaterialien sind MIL-53, Zn-tBuisophthalsäure, Al-BDC, MOF-5, IRMOF-8, Cu-BTC, AL-NDC, Al-AminoBDC, Cu-BDC-TEDA, Zn-BDC-TEDA, Al-BTC, Al-NDC, Mg-NDC, Al-Fumarat, Zn-2-Methylimidazolat, Zn-2-Aminoimidazolat, Cu-Biphenyldicarboxylat-TEDA, MOF-177, MOF-74. Weiter mehr bevorzugt sind Al-BDC und Al-BTC.

Weiter bevorzugte metallorganische Gerüstmaterialien sind Al-Terephthalat, Al-Fumarat, Mn-Terephthalat, Mg-NDC, Y-BDC, Y-Imidazoldicarboxylat, Al-Imidazoldicarboxylat, Cu-BTC sowie Zn-Dihydroxyterphthalat.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf die DE-A 103 55 087 sowie WO-A 2005/049892 verwiesen. Die auf diesem Weg hergestellten metallorganischen Gerüstmaterialien weisen besonders gute Eigenschaften in Zusammenhang mit der Adsorption und Desorption von chemischen Stoffen, insbesondere von Gasen.

Unabhängig von dessen Herstellung fällt das metallorganische Gerüstmaterial in pulverförmiger bzw. kristalliner Form an. Dieses kann als solches als Trockenmittel in der erfindungsgemäßen Verwendung alleine oder zusammen mit anderen Trockenmitteln oder weiteren Materialien eingesetzt werden. Weiterhin kann das metallorganische Gerüstmaterial in einen Formkörper umgewandelt werden.

Ein weiterer Gegenstand der vorliegenden Erfindung ist daher die erfindungsgemäße Verwendung eines metallorganischen Gerüstmaterials als Formkörper.

Bevorzugte Verfahren sind hierbei die Verstrangung oder Tablettierung. Bei der Formkörperherstellung können zum metallorganischen Gerüstmaterial weitere Materialien, wie beispielsweise Binder, Gleitmittel oder andere Additive hinzugesetzt werden. Ebenso ist es denkbar, dass Mischungen von Gerüstmaterial und anderen Trockenmittel als Formkörper hergestellt werden oder getrennt Formkörper ergeben, die dann als Formkörpermischungen eingesetzt werden.

Hinsichtlich der möglichen Geometrien dieser Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Vorzugsweise liegt Komponente B als Formkörper vor. Bevorzugte Ausgestaltungen sind Tabletten sowie strangförmige Extrudate. Die Formkörper erstrecken sich vorzugsweise in mindestens eine Dimension des Raumes im Bereich von 0,2 mm bis 30 mm, weiter bevorzugt von 0,5 mm bis 5 mm, insbesondere von 1 mm bis 3 mm.

Das Mittelgewicht der Mischung liegt typischerweise im Bereich von 0,2 bis 0,7 Kg/l.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; optional Waschen und/oder Trocknen und/oder Calcinieren des Extrudates; optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Die erfindungsgemäße Verwendung zur Trocknung erfolgt dahingehend, dass die organische Flüssigkeit mit dem metallporösen metallorganischen Gerüstmaterial in Verbindung gebracht wird. Dies kann durch statische oder dynamische Trocknung erfolgen. Bei der statischen Trocknung wird der organischen Flüssigkeit das Trockenmittel gesetzt und wieder entfernt, wobei bei der dynamischen Trocknung die organische Flüssigkeit das Trockenmittel durchströmt.

Zur Steigerung der Aufnahmefähigkeit kann das poröse metallorganische Gerüstmaterial vor der erfindungsgemäßen Verwendung selbst einem Trocknungsschritt durch Erhitzen unterworfen werden. Dabei wird das poröse metallorganische Gerüstmaterial im Sinne der vorliegenden Erfindung aktiviert.

Typischerweise werden die metallorganischen Gerüstmaterialien dadurch aktiviert, dass diese auf etwa 100°C bis 200°C erhitzt werden. Dies kann begleitet sein durch Anlegen von Vakuum oder Verwendung von Schutzgas wie Stickstoff. Hierbei kann neben Wasserspuren auch Kohlendioxid entfernt und somit die Wasseraufnahmekapazität gesteigert werden.

Ebenso kann das poröse metallorganische Gerüstmaterial, nachdem dieses Wasser aufgenommen hat, durch Erhitzen regeneriert werden.

Weiterhin ist möglich, dass durch geeignete Wahl des porösen metallorganischen Gerüstmaterials, insbesondere durch Verwendung kupferhaltiger metallorganischer Gerüstmaterialien, der Grad der Wasseraufnahme durch eine Farbänderung festgestellt werden kann.

Bei der organischen Flüssigkeit kann es sich um eine beliebige organische Flüssigkeit handeln. Typischerweise handelt es sich um ein organisches Lösemittel oder ein Gemisch organischer Lösemittel, die einen bestimmten Grad an Wasser aufweisen.

Bevorzugt handelt es sich bei der organischen Flüssigkeit um einen Alkohol, um einen Ether, um einen Ester, um einen Keton, um ein Amid, um ein gegebenenfalls halogenierter Kohlenwasserstoff, um ein Nitril, um ein Amin, um eine schwefelhaltige organische Flüssigkeit, um eine Nitroverbindung oder um ein Gemisch davon.

Beispiele für eine solche organische Flüssigkeit sind Desinfektionsmittel, anorganische oder organische Lösemittel, Treibstoffe - insbesondere Benzin oder Diesel -, Hydrau lik-, Kühler-, Bremsflüssigkeit oder ein Öl, insbesondere Maschinenöl. Weiterhin kann es sich bei der organischen Flüssigkeit um halogenierte aliphatische oder aromatische, cyclische oder acyclische Kohlenwasserstoffe oder Mischungen davon handeln. Insbesondere kann die Flüssigkeit Aceton, Acetonitril, Anilin, Anisol, Benzol, Benzonitril, Brombenzol, Butanol, tert.-Butanol, Chinolin, Chlorbenzol, Chloroform, Cyclohexan, Diethylenglykol, Diethylether, Dimethylacetamid, Dimethylformamid, Dimethylsulfoxid, Dioxan, Eisessig, Essigsäureanhydrid, Essigsäureethylester, Ethanol, Ethylencarbonat, Ethylendichlorid, Ethylenglykol, Ethylenglykoldimethylether, Formamid, Hexan, Isopropanol, Methanol, Methoxypropanol, 3-Methyl-1-butanol, Methylenchlorid, Methylethylketon, N-Methylformamid, N-Methylpyrrolidon, Nitrobenzol, Nitromethan, Piperidin, Propanol, Propylencarbonat, Pyrridin, Schwefelkohlenstoff, Sulfolan, Tetrachlorethen, Tetrachlorkohlenstoff, Tetrahydrofuran, Toluol, 1,1,1-Trichlorethan, Trichlorethylen, Triethylamin, Triethylenglykol oder Mischungen hiervon handeln.

Insbesondere handelt es sich bei der organischen Flüssigkeit um Toluol, Acetonitril oder Heptanol.

### Beispiel 1 Herstellung eines Cu-BTC metallorgansichen Gerüstmaterials

27,8 kg wasserfreies CuSO₄ werden zusammen mit 12,84 kg 1,3,5-Benzoltricarbonsäure (BTC) in 330 kg Ethylenglykol suspendiert und mit N2 abgedeckt. Der Kessel wird auf 110°C gebracht und die Synthesemischung 12 h lang unter Rühren auf dieser Temperatur gehalten. Die Lösung wird auf 50°C abgekühlt und unter N2-Abdeckung mit einer Drucknutsche filtriert. Der Filterkuchen wird mit 4 x 50 l Methanol gewaschen und 96 h mit Stickstoff trockengeblasen.

### Beispiel 2 Trocknung von Toluol

100 g Toluol werden in einem Erlenmeyerkolben vorgelegt und 1 g Wasser zugegeben. 10 g des gemäß Beispiel 1 erhaltenen Gerüstmaterials werden bei 140°C im Vakuumtrockenschrank während 16 h vorgetrocknet und dem Toluol zugegeben. Die Suspension wird mittels Magnetrührer 3 h bei Raumtemperatur gerührt. Der Wassergehalt der organischen Phase wird zu Versuchsbeginn (vor Zugabe des metallorganischen Gerüstmaterials) und am Ende des Versuchs titrimetrisch nach Karl-Fischer bestimmt. Es wird festgestellt, dass der Wassergehalt der organischen Phase durch die Trocknung von 0,06 auf 0,02 Gew.-% abgenommen hat.

### Beispiel 3 Trocknung von Acetonitril

100 g Acetonitril werden in einem Erlenmeyerkolben vorgelegt und 1 g Wasser zugegeben. 10 g des gemäß Beispiel 1 erhaltenen Gerüstmaterials werden bei 140°C im Vakuumtrockenschrank während 16 h vorgetrocknet und dem Acetonitril zugegeben. Die Suspension wird mittels Magnetrührer 3 h bei Raumtemperatur gerührt. Der Wassergehalt der organischen Phase wird zu Versuchsbeginn (vor Zugabe des metallorganischen Gerüstmaterials) und am Ende des Versuchs titrimetrisch nach Karl-Fischer bestimmt. Es wird festgestellt, dass der Wassergehalt der organischen Phase durch die Trocknung von 1,0 auf 0,65 Gew.-% abgenommen hat.

### Beispiel 4 Trocknung von Heptanol

100 g Heptanol werden in einem Erlenmeyerkolben vorgelegt und 1 g Wasser zugegeben. 10 g des gemäß Beispiel 1 erhaltenen Gerüstmaterials werden bei 140°C im Vakuumtrockenschrank während 16 h vorgetrocknet und dem Heptanol zugegeben. Die Suspension wird mittels Magnetrührer 3 h bei Raumtemperatur gerührt. Der Wassergehalt der organischen Phase wird zu Versuchsbeginn (vor Zugabe des metallorganischen Gerüstmaterials) und am Ende des Versuchs titrimetrisch nach Karl-Fischer bestimmt. Es wird festgestellt, dass der Wassergehalt der organischen Phase durch die Trocknung von 1,0 auf 0,51 Gew.-% abgenommen hat.

## Patentansprüche

1. Verwendung eines porösen metallorganischen Gerüstmaterials, enthaltend mindestens eine an mindestens ein Metallion koordinativ gebundene, mindestens zweizähnige organische Verbindung, als Trockenmittel zur Verringerung oder zum Entfernen von Wasser aus einer organischen Flüssigkeit.

2. Verwendung nach Anspruch 1, **dadurch gekennzeichnet, dass** die organische Flüssigkeit ein Alkohol, ein Ether, ein Ester, ein Keton, ein Amid, ein gegebenenfalls halogenierter Kohlenwasserstoff, ein Nitril, ein Amin, eine schwefelhaltige organische Flüssigkeit, eine Nitroverbindung oder ein Gemisch davon ist.

3. Verwendung nach Anspruch 1 oder 2, **dadurch gekennzeichnet, dass** die organische Flüssigkeit Toluol, Acetonitril oder Heptanol ist.

4. Verwendung nach einem der Ansprüche 1 bis 3, **dadurch gekennzeichnet, dass** das mindestens eine Metallion ein Ion der Metalle ausgewählt aus der Gruppe bestehend aus Zn, Al, Mg, Cu, Mn, Fe, Co, Ni, Ti, Zr, Y, Sc, V, In, Ca, Cr, Mo, W und einem Lanthanid ist.

5. Verwendung nach Anspruch 4, **dadurch gekennzeichnet, dass** das mindestens eine Metallion ein Ion des Metalls Kupfers ist.

6. Verwendung nach einem der Ansprüche 1 bis 5, **dadurch gekennzeichnet, dass** die mindestens eine mindestens zweizähnige organische Verbindung sich von einer Di-, Tri- oder Tetracarbonsäure ableitet.

7. Verwendung nach Anspruch 6, **dadurch gekennzeichnet, dass** die mindestens eine mindestens zweizähnige organische Verbindung 1,3,5-Benzoltricarbonsäure ist.

8. Verwendung nach einem der Ansprüche 1 bis 7, **dadurch gekennzeichnet, dass** das metallorganische Gerüstmaterials als Formkörper vorliegt.

## Claims

1. The use of a porous metal organic framework comprising at least one at least bidentate organic compound coordinate to at least one metal ion as desiccant for reducing the water content of an organic liquid or for removing water from an organic liquid.

2. The use according to claim 1, wherein the organic liquid is an alcohol, an ether, an ester, a ketone, an amide, an optionally halogenated hydrocarbon, a nitrile, an amine, a sulfur-comprising organic liquid, a nitro compound or a mixture thereof.

3. The use according to claim 1 or 2, wherein the organic liquid is toluene, acetonitrile or heptanol.

4. The use according to any of claims 1 to 3, wherein the at least one metal ion is an ion of a metal selected from the group consisting of Zn, Al, Mg, Cu, Mn, Fe, Co, Ni, Ti, Zr, Y, Sc, V, In, Ca, Cr, Mo, W and lanthanides.

5. The use according to claim 4, wherein the at least one metal ion is an ion of the metal copper.

6. The use according to any of claims 1 to 5, wherein the at least one at least bidentate organic compound is derived from a dicarboxylic, tricarboxylic or tetracarboxylic acid.

7. The use according to claim 6, wherein the at least one at least bidentate organic compound is 1,3,5-benzenetricarboxylic acid.

8. The use according to any of claims 1 to 7, wherein the metal organic framework is present as shaped bodies.

## Revendications

1. Utilisation d'un matériau de squelette métallo-organique poreux, contenant au moins un composé organique au moins bidentate relié coordinativement à au moins un ion métallique, en tant qu'agent siccatif pour réduire ou éliminer l'eau d'un liquide organique.

2. Utilisation selon la revendication 1, **caractérisée en ce que** le liquide organique est un alcool, un éther, un ester, une cétone, un amide, un hydrocarbure éventuellement halogéné, un nitrile, une amine, un liquide organique contenant du soufre, un composé nitro ou un de leurs mélanges.

3. Utilisation selon la revendication 1 ou 2, **caractérisée en ce que** le liquide organique est le toluène, l'acétonitrile ou l'heptanol.

4. Utilisation selon l'une quelconque des revendications 1 à 3, **caractérisée en ce que** le ou les ions métalliques sont un ion des métaux choisis dans le groupe constitué par Zn, Al, Mg, Cu, Mn, Fe, Co, Ni, Ti, Zr, Y, Sc, V, In, Ca, Cr, Mo, W et d'un lanthanide.

5. Utilisation selon la revendication 4, **caractérisée en ce que** le ou les ions métalliques sont un ion du métal cuivre.

6. Utilisation selon l'une quelconque des revendications 1 à 5, **caractérisée en ce que** le ou les composés organiques au moins bidentates dérivent d'un acide di-, tri- ou tétracarboxylique.

7. Utilisation selon la revendication 6, **caractérisée en ce que** le ou les composés organiques au moins bidentates sont l'acide 1,3,5-benzènetricarboxylique.

8. Utilisation selon l'une quelconque des revendications 1 à 7, **caractérisée en ce que** le matériau de squelette métallo-organique se présente sous la forme d'un corps moulé.
